# EUROPEAN PATENT SPECIFICATION

(11) **EP 1 819 637 B1**
(45) Date of publication and mention of the grant of the patent: **30.03.2011**
(21) Application number: 04822572.6
(22) Date of filing: 09.12.2004
(51) Int. Cl.: C01B 31/06, B01J 3/06

(54) **SYNTHESIS OF DIAMOND**
SYNTHESE VON DIAMANT
SYNTHESE DE DIAMANT

(43) Date of publication of application: 22.08.2007
(73) Proprietor: Element Six (Production) (Pty) Ltd., Nuffield 1559 Springs (ZA)
(72) Inventor: STRÖMANN, Corina, Vera, Helga 34 Jupiter Street, 1459 Boksburg (ZA); TSHISIKHAWE, Francis 8806 Zone 5, 1809 Soweto (ZA); HANSEN, John, Olaf, 2056 Paulshof (ZA); BURNS, Robert, Charles, 2195 Northcliff (ZA)
(74) Representative: Goodfellow, Hugh Robin
(86) International application number: PCT/IB2004/004045
(87) International publication number: WO 2006/061672

(56) References cited:
- US-A- 4 333 986
- US-A- 6 030 595
- NAKA, S. ET AL: "Effect of ambient pretreatment of graphite and solvent-catalyst on diamond formation" JOURNAL OF MATERIALS SCIENCE, vol. 22, 1987, pages 1081-1086, XP009050967

## Description

### BACKGROUND OF THE INVENTION

This invention relates to a method of synthesising diamond.

The synthesis of diamond under high temperature and high pressure conditions is well known and well established. There are two principal methods employed and both are from solution. The one method is a temperature gradient method and the other is an allotropic change method. In the temperature gradient method, the driving force for crystal growth is the supersaturation due to the difference in solubilities of source material and the growing crystal as a result of a temperature difference between the two. In the allotropic change method, the driving force of crystal growth is the supersaturation due to the difference in solubilities of source material and the growing crystal as a result of an allotropic (or polymorphic) difference between the two.

Almost all diamond synthesised from solution contains nitrogen and is diamond of type Ib.

When growing diamonds of the type IIa, which have nitrogen content generally, lower than 1 ppm (parts per million by mass), the removal of nitrogen from the starting materials can be achieved by degassing (or outgassing) in high vacuum at elevated temperatures. This method is however not generally used. Instead a method involving a chemical partitioning principle or gettering is favoured. In this method, no attempt or only a limited attempt is made to remove the nitrogen from the starting materials but rather an agent is added to the solvent/catalyst, which is typically a molten alloy of the transition metals cobalt, iron and nickel. This agent has the effect of preferentially sequestering the nitrogen in the metallic melt, either as a solute or as a precipitated nitride or carbo-nitride. Such agents are typically elements like titanium, zirconium and aluminium. If for any reason these elements are considered to be undesirable contaminants in the final grown crystal, the obvious alternative is the use of the direct physical elimination of the nitrogen by high temperature degassing. Apart from the technical difficulty of full exclusion of nitrogen from the synthesis materials, there is a further reason why this approach has not been used until now. This reason has to do with certain negative side effects of degassing of the starting materials, which are observed in practice. These are:
1. a lower growth rate of the diamond crystals in the absence of nitrogen and other gases;
2. a higher uptake of metallic inclusions when growing from materials which have been de-gassed, and in particular when the materials have been stripped of nitrogen and other nitrogen-containing gases;
3. the appearance of the minor growth sectors and their crystal faces (113) (115) (110);
4. a higher solubility of carbon in the solvent/catalyst melt and consequent attack on the diamond seed crystals during the early stages of growth; and
5. an increased susceptibility to cracking, internal strain and poor clarity of the diamonds grown from the de-gassed materials.

Because of these difficulties, the use of direct physical elimination of nitrogen, so as to ensure growth of high-purity type IIa diamonds, has not been carried out effectively or commercially.

Naka S et al. ("Effect of ambient pre-treatment of graphite and solvent catalyst un diamond formation", Journal of Materials Science, vol. 22, 1987) discloses a method for synthesising diamond from a mixture of purified natural graphite and a solvent-catalyst under high pressure and temperature conditions (7GPa, 1700°C). Before being converted to diamond, the starting materials are subjected to pre-treatment: specifically the graphite and solvent-catalyst are first treated in a vacuum at 400°C and 2x10⁻⁵ torr followed by further treatment at 1000°C either in a vacuum at 2x10⁻⁵ torr or in N₂ at 1x10⁻³ torr or in Ar at 1x10⁻³ torr.

### SUMMARY OF THE INVENTION

According to the present invention, a method of synthesising diamond comprises the steps of providing a reaction mixture of a carbon source and a solvent/catalyst, pre-trating the reaction mixture or individual components at a temperature of greater than 1100°C and a vacuum of less than 1×10⁻⁴ mbar to remove substantially all of the atmospheric gases and other light volatile atoms and at a reduced temperature replacing them with a desirable process gays, and subjecting the pre-treated reaction mixture to elevated temperature and pressure conditions in the diamond stable region of the carbon phase diagram In the presence of the process gas.

The process gas is one that preferably has two or more of, and preferably all of, the following properties:
(1) It will enhance the diamond growth rate;
(2) It will reduce solvent/catalyst inclusions;
(3) It will shift the morphology of the synthesised diamond (grown crystals) towards major crystal faces and blockier shape;
(4) It will reduce cracking and strain in the grown crystals, preferably at a desirably high growth rate; and
(5) It will permit the controlled and uniform doping of the diamond crystal with a hetero-atom such as P (phosphorus) or S (sulphur).

Examples of particularly suitable process gases are methane, hydrogen, phosphine, ammonia, isotopically pure nitrogen or ammonia, diborane, silane, or a hydrogen-producing gas such as water vapour, ethane, hydrogen sulphide and ethanol vapour.

The invention has particular application to producing high quality diamond of low nitrogen content and of a large size. Typically, such diamonds will have a nitrogen content of less than 1 ppm and have a size of at least 0.5 carats. Such diamonds will be made by the temperature gradient method. This method involves providing a reaction mass of a source of carbon separated from seed crystal by a mass of solvent/catalyst and subjecting the contents of the capsule to conditions of elevated temperature in the diamond stable range such that a temperature gradient is established between the carbon source and the seed, with the seed being at the low end of this temperature gradient.

In one preferred form of the invention, the carbon source and solvent/catalyst are treated to reduce the nitrogen content as far as possible and preferably below 1 ppm.

The carbon source may be any known in the art including diamond, which may be CVD diamond and is preferably graphite.

The solvent/catalyst may be any known in the art but is preferably cobalt, iron or nickel or combinations of two or more such metals or alloys containing one or more such metals.

### DESCRIPTION OF THE DRAWINGS

Figure 1 illustrates schematically an example of a reaction mass for the method of the invention,
Figure 2 illustrates a sectional side view of a capsule containing the reaction mass of Figure 1, and
Figure 3 illustrates a sectional side view of a gas backfilling chamber useful in the method of the invention.

### DESCRIPTION OF EMBODIMENTS

In the method of the invention, the reaction mass comprising the source carbon material, the solvent/catalyst alloy and the seed diamonds, and additionally any ceramic components which are used to provide a refractory barrier between the reaction mass and the rest of the high pressure system, are purified of light volatile atoms (otherwise gases) by the application of high temperature and high vacuum. This is best done when these components are separated, rather than in assembled form, so as to allow free movement of the light volatile atoms. In particular there is a concentration of nitrogen atoms that may have been absorbed from the air, or may have been present within the metal particles as metallic nitrides because of the nature of the metallurgical processes used in formation of the metal alloys.

It would be understood by those working in the field that the term gas is meant to describe those chemical species that are gases or vapours at normal temperatures and pressures, but which could also exist as adsorbed layers on the surfaces of a powder, or even absorbed solutes in a metal solution. At the high pressures that are required for the synthesis of diamond, the pore space, which exists in sintered solids, and polycrystalline materials such as ceramics would be compressed down to almost zero volume. Any gases that were present before compaction would be forced into solution in the metal phase or into some form of supercritical fluid, which would accumulate in whatever small pore volume still exists.

When one talks of diamond synthesis in the presence of a gas or a gas atmosphere, it should not be implied that there is a free space or open volume in which the gas collects or persists in the high pressure synthesis chamber. Rather it is a reference to mobile and small atoms, sometimes called light atoms, which can persist as solutes (dissolved atoms) in the reaction mixture at HPHT conditions and dramatically affect the course of the synthesis or reconstitution process. Nitrogen is an example since it comprises (as the molecular species dinitrogen, N₂), 80 percent of the gas that persists in the pore space of the reaction mixture and the surrounding ceramics. However, there is an additional supply of nitrogen in the form of dissolved nitrogen present in the solvent catalyst metals, which would have been present since the smelting of the metals. A typical chemical analysis will show that the metals can have a dissolved nitrogen content of between 20 and 50 parts per million (micrograms per gram). When the metals have a density of 7 grams per millilitre and a porosity of 20 percent by volume, as is typically the case, the nitrogen present in solution is at least as great a contribution as the nitrogen in the air present in the pore spaces. Similarly, water can be present as water vapour in the pore space or as water of crystallisation in the ceramic components . Oxygen can be present as O₂ molecular gas in the pore space or as dissolved oxygen and even metallic oxides in the solids of the reaction mixture.

The process of vacuum purification of the reaction mixture consists of at least two steps. Firstly, at relatively low vacuum and temperature, the gases present in the pore volume of the solids are pumped away leaving a vacuum. Secondly, the application of conditions of high vacuum, less than 10⁻⁴ mbar, and high temperature, greater than 1100°C, encourages the decomposition of chemically bound gas-forming species such as oxides, nitrides and hydrates. The products are molecular or atomic gases, which are pumped from the vacuum furnace to leave a more pure metallic and ceramic phase. The first process does not produce a weight change in the outgassed materials since air has neutral buoyancy when weighed in air. The second process produces a weight change, which can be monitored to assess the effect of the outgassing, and is typically a few hundredths of a percentage point by mass, or otherwise a few hundred ppm.

The first part of the method of the invention relates to the vacuum purification of the reaction mass, but from the above discussion it should be clear that the formation of a vacuum in the pore space of the sintered solids is only the one aspect of the process. To speak then of an evacuated capsule is only partly accurate. The reaction mixture is contained in the capsule. The capsule is a braze-sealed canister formed from two cups of a refractory metal such as tantalum. The capsule will typically have the gas removed from its inner space and all the pore space in whatever solid bodies are placed in the capsule. Over and above that, the solid phases would themselves have been stripped almost completely of the volatile species such as nitrogen, oxygen and hydrogen and their reaction products. This process requires a combination of temperature, vacuum and time. The first action of creating a vacuum within the canister is not a sufficient process. There is a subsequent stage of vacuum purification, which depends upon the equilibrium between a solid compound and the gaseous products of its decomposition, for instance:
MeX -> Me + ½ X₂.
where Me is a metal species, for instance iron (Fe), and X is a gas species, for instance nitrogen (N). It will be clear to those practised in thermochemistry (alternatively chemical thermodynamics) that the application of high temperature, for reasons related to the entropy term in the free energy function, and low pressure, or high vacuum, for reasons related to the pressure-volume term in the free energy function, would favour the forward reaction and cause the removal of the species X from the solid phase or phases. This is not the same as physical evacuation, but is central to the process of vacuum purification in accordance with the invention.

After purification the components must be protected from readmission of atmospheric gases during the assembly of the capsule. For this purpose an argon-filled glove box is installed at the loading port of the vacuum furnace used for purification. If the same furnace is to be used for sealing the canister, by the method of vacuum brazing, then the canister can be assembled and returned to the same vacuum furnace. If, however, it is considered better practice to perform the braze sealing in a separate furnace, set aside for this purpose, then the assembled canister must be placed in a transfer container, filled with argon, closed to prevent access to air, and then transferred to the appropriate braze-sealing furnace.

The ceramic barrier is formed from a tube and pads made of a suitable ceramic with refractory properties, and this might be selected from the oxide ceramics such as pyrophyllite, magnesia, alumina and combinations that are proved in the HPHT process.

The canisters which contain the reaction mass and the barrier ceramics must be capable of forming an impervious layer between the inner reaction volume, which is free of nitrogen and other atmospheric gases, and the outer components which are saturated with these gases. Preferably they are made from one of the refractory metals tantalum, titanium, molybdenum or niobium. Metals such as iron (steel) and nickel are susceptible to melting and admission of the undesirable gases nitrogen and oxygen.

Once the canister has been sealed under vacuum and cooled, the final step of gas filling can be carried out.

The process of introduction of the process gas is non-trivial, for reasons that will become apparent. The value of the method of the invention lies in the bringing together of two processes, vacuum purification, and subsequent gas addition or treatment, which is carried out at a lower temperature than is practised in the purification process and preferably in a completely separate chamber from the cleaning or even brazing chamber. The gas filling process is typically carried out at a temperature of about 20°C to about 50°C, in particular about 50 °C.

The filling procedure is carried out in a specifically designed chamber, at low to moderate temperatures where there is no deleterious reaction between the process gas and the canister metals. If process gases containing hydrogen are admitted to the vacuum furnace at the conditions used to purify the components, or even the conditions used to seal the components, there will be undesirable reactions between the reaction mass and the process gas, or the tantalum cups used in the canister, and the process gas, rendering such method inutile.

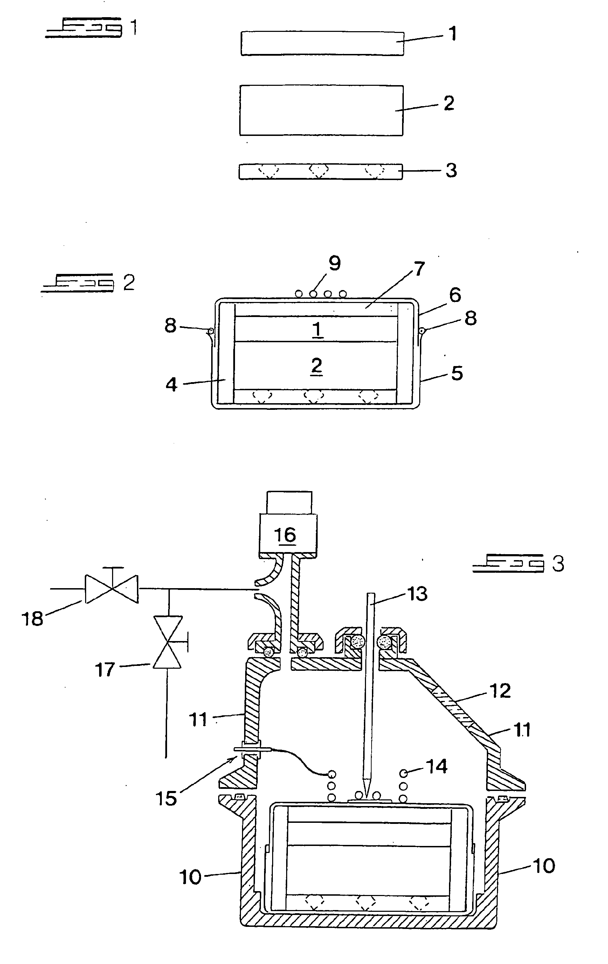

An embodiment of the invention will now be described with reference to the accompanying drawings. Referring to Figure 1, a reaction mass suitable for producing large crystal diamond using a temperature gradient method is illustrated by Figure 1. Referring to this figure, (1) is a carbon source composed of diamond or graphite and mixed with solvent/catalyst such as cobalt and iron powders in the proportion of 60:40:15 cobalt : iron : graphite or diamond. (2) is a solvent/catalyst mass approximately three times the mass of the carbon source, and composed of graphite mixed with solvent/catalyst such as cobalt and iron powders in the proportion 60:40:5 cobalt : iron : graphite. (3) is a ceramic plate drilled to carry diamond seeds of the size 0,4 to 0,5 mm and number 10 to 40 depending on the desired final crystal size. The ceramic may be suitable high temperature stable oxide selected from, for example, pyrophyllite, magnesia or zirconia.

The three units (1), (2) and (3) of the reaction mass were pressed in the form of cylinders of diameter to suit a refractory ceramic container (e.g. pyrophyllite) shown in Figure 2, or else deliberately undersized by a defined fraction so that after the high temperature treatment the expanded diameter would be suitable for insertion of each particular unit into the ceramic refractory container with a good fit. These materials were subjected to a heat treatment in vacuum for a period of greater than 6 hours and less than 48 hours until a final vacuum of better than 3,5 x 10⁻⁶mbar was achieved at a temperature of 1100°C. This treatment effectively reduces those gas impurities, which are present in the pore space of the powder mixtures, on the surfaces of the powder particles, and contained in the metal particles as dissolved species. It does not remove those gases, which are contained in refractory phases like diamond. To reduce these gases, a source carbon of low contained carbon must be used, such as, for example, spectroscopic graphite or diamond grown by chemical vapour deposition in a nitrogen-free environment. The components were cooled in vacuum of better than 2 x 10⁻⁶mbar (2 x 10⁻⁴ Pa) and unloaded in an argon atmosphere for assembly into the container shown in Figure 2.

The container in Figure 2 comprises the following components:
(4) a refractory ceramic tube, e.g. pyrophyllite;
(5) a refractory metal cup, e.g. tantalum;
(6) a refractory metal lid, e.g. tantalum; and
(7) refractory ceramic end discs, e.g. pyrophyllite.

The cup 5 and lid 6 fitted together in such a way that a seam could be established and a braze wire 8 of suitable composition and size could be placed over the seam and held in place by suitably tensioning the wire. A smaller piece of the braze wire 9 was formed into a circle and placed on the centre of the upper face of the lid 6.

The assembly was carried out under an atmosphere of argon using a vacuum furnace fitted with a suitable transfer glove box such as for instance the Centorr™ Vacuum Industries' series 46 bottom loading furnace.

The assembled container was heated in a vacuum to the melting point of the braze, with a suitable program of temperature and dwelling times to allow gases to escape from the containment before the melting of the braze. A vacuum of better than 7 x 10⁻⁶mbar (7 x 10⁻⁴ Pa) was achieved. At the braze temperature, for example 1025°C, the braze metal, which was a composition suitable for the brazing of the cup and lid 6, for example an alloy of 5% palladium in silver, was caused to melt, wet the cup and lid and flow into the seam. This process was allowed to proceed for a defined short time, so as to prevent the loss of braze by evaporation, and typically this time was 15 to 25 minutes. The smaller piece of braze metal 9 was allowed to melt and flow onto the lid 6 forming a wetted patch of approximately 6 - 10 mm diameter. After this time, the sealed container was cooled in vacuum to 80°C and removed. At this point, the container was found to be hermetically sealed and contained the purified synthesis materials free of all gas contaminants. This is referred to as an outgassed and sealed capsule.

Before transferring the outgassed and sealed capsule to a backfilling and sealing unit, shown in Figure 3, the excess braze 8 at the perimeter of the capsule was removed by abrasion, and a ring of low temperature lead-tin solder-wire was placed on the centre of the braze patch 9 on the upper face of the lid 6.

Alternatively the braze patch and ring of solder wire were omitted and a alternative sealing method was applied as will be discussed.

The backfilling unit shown in Figure 3 consists of the following components:
(10) machined rigid backfilling chamber base, split for loading and furnished with O-ring seal and clamps (not shown);
(11) machined rigid backfilling lid provided with service ports for gas, electrical and piercing tool access points, observing good vacuum practice such as use of O-ring seals and feedthroughs;
(12) viewing port for the control of piercing and soldering steps;
(13) piercing tool, e.g. hardened steel rod with sharpened tip, passing through compression seal to allow linear action;
(14) heating element of Kantral wire to cause soldering action;
(15) gas-tight feedthrough for heater current;
(16) precision manometer -1 bar gauge (0 bar absolute) to 2 bar gauge (3 bar absolute);
(17) vacuum pumping line with isolating valve; and
(18) gas backfilling line with isolating valve.

The container of Figure 2 was placed in the machined recess in the base of the backfilling chamber (10) so as to locate the ring of solder centrally below the piercing tool (13). The chamber was sealed using lid (11) and evacuated to less than 10 mbar (1 kPa) as indicated by the precision manometer attached to the chamber (16). The desired backfilling gas, in this example methane CH₄, was admitted via line (18) to a pressure of 0 bar gauge (1 bar absolute) or slightly higher e.g. 0,1 bar gauge (1,1 bar absolute), at a temperature of about 50 °C. The chamber was then evacuated via line (17) to less than 10 mbar (1 kPa) and the process was repeated at least 5 times, so as to minimise retention of nitrogen in the chamber. After the last such rinsing cycle, the chamber was filled to 1 bar absolute or higher (P in the gas equation below) with the desired process gas or mixture of process gases, after which the container was pierced by driving the piercing tool downwards through the linear seal and piercing the refractory metal lid 6 of the container. The pierced hole was located centrally within the ring of solder and on the patch of braze metal. The inflow of gas into the evacuated capsule was detected as a downward pressure deviation in the manometer, for example, from 0 bar gauge to -0,005 bar gauge, and also by a change in appearance of the metal lid, which could be viewed via the viewing port (12). After piercing, the capsule no longer had an internal vacuum and the lid could be deflected up and down. The capsule was allowed to stand in the gas atmosphere for one hour for the gas to equilibrate with the contents of the capsule, after which time the deviation of the pressure was used to estimate the gas uptake in the capsule. The expression for the calculation of the volume of gas transferred from the backfilling chamber to the capsule is:

| | |
|---|---|
| *v_{b}* = *V_{c}* x *_{Δ}P* ÷ *P₂* where | V_{b} is the backfilled volume, |
| | V_{c} is the chamber volume, P₂ is the final |
| pressure (abs) and the delta sign implies the change in pressure after the ideal gas law. | |

The container was then sealed by passing a current of approximately 15 amps through the ring-shaped heating element (14), which lightly abutted the lid 6 of the container, causing the solder to melt and flow over the hole pierced in the lid.

Alternatively, after the equilibration time with the capsule contents of approximately one hour, the process gas was displaced through a non-return valve and burned off in a burn-off flame as is good practice in the field of high temperature furnace treatment. Argon was used to displace the process gas. Once the process gas was fully eliminated from the chamber, the argon flow was stopped and the lid was lifted off. This allowed access to the canister lid for the fixing of a tantalum patch, with epoxy adhesive layer over the puncture hole whilst the canister was protected in a layer of argon, in this way minimising access for air and its component gases. This is referred to as tantalum-patch sealing.

The sealed container was removed from the backfilling chamber after equilibrating the pressure and placed within the appropriate cradle of pressure medium for loading in a high-pressure high-temperature synthesis system. The synthesis system was brought to a temperature of 1300°C at 5,0 GPa approximately, and a temperature gradient was applied to the capsule by means of a biased heater design so as to ensure a carbon flux of 1 to 2 milligrams per hour of growing crystal. After 100 hours a set of ten or more diamonds of median size 0,7 carats (140 mg) was found to have grown in the capsule. These diamonds were separated from the solvent/catalyst metals by acid treatment and found to have the following properties:
1) type IIa character with nitrogen level of less than 1 ppm in all growth sectors;
2) good crystallinity with euhedral blocky shape and symmetrical faces;
3) no or very few cracks associated with damage at the seed face, or any other cracking;
4) a good Raman peak at 1332 cm-1; and
5) low metallic inclusions as indicated by a metals meter content reading of 1-10.

When the gas-backfilling step was not carried out, much smaller crystals were found to have grown, in the range of 0,1 to 0,3 carats (20 to 60 mg), the crystals exhibited a rounded shape with poor symmetry, the crystals were subjected to multiple cracking and internal flaws related to strain; the crystals had a high metallic inclusion content as indicated by a metals meter content reading of 130 to 190.

## Claims

1. A method or synthesising diamond comprises the steps of providing a reaction mixture of a carbon source and a solvent/catalyst, pre-treating the reaction mixture or individual components at a temperature greater than 1100°C and a vacuum of less than 1x10⁻¹ mbar to remove substantially all of the atmospheric gases and other light volatile atoms and replaying them with a desirable process gas at a reduced temperature, and subjecting the pro-treated reaction mixture to elevated temperature and pressure conditions in the diamond stable region of the carbon phase diagram in the presence of the process gas.

2. A method according to claim 1, wherein replacement of the removed atmospheric gases and other light volatile atoms with a process gas is carried out at a temperatures of 20 to 50°C.

3. A method according to claim 2, wherein replacement with the process gas is carried out at a temperature of 50°C.

4. A method according to any one of the preceding claims, wherein the process gas is selected from the group comprising methane, hydrogen, phosphine, ammonia, isotopically pure nitrogen or ammonia, diborane, silane, water vapour, methane, hydrogen sulphide and ethanol vapour.

5. A method according to any one of the preceding claims, wherein the removal of the atmospheric gases and other light volatile atoms and replacement with a desirable process gas take place in separate chambers.

6. A method according to any one of the preceding claims, wherein the reaction mixture is contained in a sealed canister formed from a refractory metal.

7. A method according to claim 6, wherein the refractory metal is selected from the group comprising tantalum, titanium, molybdenum and niobium.

8. A method according to claim 6 or claim 7, wherein the container further includes a ceramic barrier to assist in forming an impervious layer between the inner reaction volume and the outer atmosphere.

9. A method according to claim 8, wherein the ceramic barrier is formed from n ceramic material selected from the group comprising pyrophyllite, magnesia, alumina, and combinations thereof.

10. A method according to any one of the preceding claims, wherein the diamonds is produced in a temperature gradient method.

## Patentansprüche

1. Verfahren zum Synthetisieren von Diamant, umfassend die Schritte: Bereitstellen einer Reaktionsmischung aus einer Kohlenstoffquelle und einem Lösungsmittel/Katalysator, Vorbehandeln der Reaktionsmischung oder von individuellen Bestandteilen bei einer Temperatur größer als 1100 °C und einem Vakuum von weniger als 1x10⁻⁴ mbar, um im Wesentlichen alle Atmosphärengase und andere leicht volatile Atome zu entfernen und diese durch ein erwünschtes Prozessgas bei einer erniedrigten Temperatur zu ersetzen, und die vorbehandelte Reaktionsmischung erhöhter Temperatur und Druckbedingungen im stabilen Diamantbereich des Kohlenstoff-Phasendiagramms in der Gegenwart des Prozessgases unterziehen.

2. Verfahren nach Anspruch 1, wobei der Austausch der entfernten Atmosphärengase und der anderen leicht volatilen Atome durch das Prozessgas bei einer Temperatur von 20 bis 50 °C ausgeführt wird.

3. Verfahren nach Anspruch 2, wobei der Austausch mit dem Prozessgas bei einer Temperatur von 50 °C ausgeführt wird.

4. Verfahren nach einem der vorhergehenden Ansprüche, wobei das Prozessgas ausgewählt wird aus der Gruppe, umfassend Methan, Wasserstoff, Phosphin, Ammoniak, isotopenreinem Stickstoff oder Ammoniak, Diboran, Silan, Wasserdampf, Ethan, Hydrogensulfid und Ethanoldampf.

5. Verfahren nach einem der vorhergehenden Ansprüche, wobei die Entfernung der Atmosphärengase und der anderen leicht volatilen Atome und der Austausch durch das erwünschte Prozessgas in abgetrennten Kammern erfolgen.

6. Verfahren nach einem der vorhergehenden Ansprüche, wobei die Reaktionsmischung in einem abgedichteten Behälter enthalten ist, der aus einem schwerschmelzenden Metall gebildet ist.

7. Verfahren nach Anspruch 6, wobei das schwerschmelzende Metall ausgewählt wird aus der Gruppe, umfassend Tantal, Titan, Molybdän und Niob.

8. Verfahren nach Anspruch 6 oder Anspruch 7, wobei der Behälter ferner eine keramische Barriere enthält, um die Bildung einer undurchlässigen Schicht zwischen dem inneren Reaktionsvolumen und der äußeren Atmosphäre zu unterstützen.

9. Verfahren nach Anspruch 8, wobei die keramische Barriere von einem keramischen Material gebildet wird, welches ausgewählt wird aus der Gruppe, umfassend Pyrophyllit, Magnesia, Tonerde und Kombinationen davon.

10. Verfahren nach einem der vorhergehenden Ansprüche, wobei der Diamant durch ein Verfahren mit Temperaturgradientem hergestellt wird.

## Revendications

1. Procédé de synthèse de diamant comprenant les étapes consistant à fournir un mélange réactionnel composé d'une source de carbone et d'un solvant / catalyseur, à prétraiter le mélange réactionnel ou les composants individuels à une température supérieure à 1 100 °C et sous un vide inférieur à 1 x 10⁻⁴ mbar afin d'éliminer pratiquement tous les gaz atmosphériques et les autres atomes volatiles légers et à les remplacer par un gaz de traitement souhaitable sous une température réduite, et à soumettre le mélange réactionnel prétraité à des conditions de température et de pression élevées dans la région de stabilité du diamant du diagramme de phases du carbone en présence du gaz de traitement.

2. Procédé selon la revendication 1, dans lequel l'étape consistant à remplacer les gaz atmosphériques et les autres atomes volatiles légers éliminés par le gaz de traitement est réalisée à une température allant de 20 à 50 °C.

3. Procédé selon la revendication 2, dans lequel l'étape de remplacement par le gaz de traitement est réalisée à une température de 50 °C.

4. Procédé selon l'une quelconque des revendications précédentes, dans lequel le gaz de traitement est choisi dans le groupe comprenant le méthane, l'hydrogène, une phosphine, de l'ammoniac, de l'azote ou de l'ammoniac isotopiquement pur, du diborane, du silane, de la vapeur d'eau, de l'éthane, du sulfure d'hydrogène et de la vapeur d'éthanol.

5. Procédé selon l'une quelconque des revendications précédentes, dans lequel les étapes consistant à éliminer les gaz atmosphériques et les autres atomes volatiles légers et à les remplacer par un gaz de traitement souhaitable ont lieu dans des chambres séparées.

6. Procédé selon l'une quelconque des revendications précédentes, dans lequel le mélange réactionnel est contenu dans un réservoir scellé composé d'un métal réfractaire.

7. Procédé selon la revendication 6, dans lequel le métal réfractaire est choisi dans le groupe comprenant le tantale, le titane, le molybdène et le niobium.

8. Procédé selon la revendication 6 ou la revendication 7, dans lequel le conteneur comprend en outre une barrière en céramique destinée à aider à la formation d'une couche imperméable entre le volume réactionnel interne et l'atmosphère externe.

9. Procédé selon la revendication 8, dans lequel la couche en céramique est composée d'un matériau en céramique choisi dans le groupe comprenant la pyrophyllite, la magnésie, l'alumine, et des combinaisons de celles-ci.

10. Procédé selon l'une quelconque des revendications précédentes, dans lequel le diamant est produit grâce à un procédé à gradient de température.
